# EUROPEAN PATENT APPLICATION

(11) **EP 4 521 712 A1**
(43) Date of publication of application: **12.03.2025**
(21) Application number: 24196958.3
(22) Date of filing: 28.08.2024
(51) Int. Cl.: H04L 61/5038, H04W 12/06, H04W 12/50, H04W 12/71, H04W 12/75

(54) **WIRELESS COMMUNICATION APPARATUS, WIRELESS COMMUNICATION METHOD, AND WIRELESS COMMUNICATION SYSTEM**

(30) Priority: 06.09.2023 JP 2023144502
(71) Applicant: DENSO CORPORATION, Aichi-pref. 448-8661 (JP)
(72) Inventor: GOTO, Fumihide, Kariya-city, Aichi-pref, 448-8661 (JP)
(74) Representative: Winter, Brandl - Partnerschaft mbB

(57) **Abstract**

A wireless communication apparatus randomly generates a media access control (MAC) address, executes a 4-way-hand-shake (4WHS) procedure as a connection procedure, the 4WHS procedure using a device identifier assigned by another wireless communication apparatus and being different from the MAC address, and in a case where the device identifier is unrecognized by such another wireless communication apparatus in the 4WHS procedure, executes a reconnection procedure for establishing a connection to such another wireless communication apparatus.

## Description

### BACKGROUND

### Technical Field

The present disclosure relates to a wireless communication apparatus, a wireless communication method, and a wireless communication system.

### Background

As wireless local area network (wireless LAN (WLAN)) standards developed by the Institute of Electrical and Electronics Engineers (IEEE), the IEEE 802.11 standards are known. The IEEE 802.11 standards include IEEE 802.11a, IEEE 802.11b, IEEE 802.11g, IEEE 802.11n, IEEE 802. 11ac, IEEE 802.11ax, and the like, for example.

A communication system in a WLAN includes an access point (referred to as an "AP" below) and a station (referred to as an "STA" below) as main components. The AP and the STA execute a connection procedure for establishing a wireless communication channel. For example, the connection procedure includes an authentication procedure, an association procedure, a 4-way-hand-shake (4WHS) procedure (for example, JP 2016-140088 A), and the like.

### SUMMARY

In the IEEE 802.11 Working Group, a standard called IEEE 802.11bh is under study. In IEEE 802.11bh, introduction of a configuration and a procedure for randomization of a media access control (MAC) address is scheduled.

For example, in a case where an STA generates a MAC address randomly, an AP may not be able to identify the STA. Hence, in order to identify an STA under execution of randomization of a MAC address, it is proposed to newly introduce a device identifier (referred to as a "device ID" below). However, no concrete procedure between an AP and an STA has been proposed at the present time. For example, in a case where an STA and an AP perform a 4WHS procedure using a device ID, such a situation may occur that the STA cannot establish a connection to the AP due to various factors (for example, mutual connectivity between the STA and AP).

The present disclosure provides a technique that can solve a situation that an STA cannot establish a connection to an AP in a case where a 4WHS procedure using a device ID has been performed.

In one or more embodiments, a wireless communication apparatus includes a controller configured to randomly generate a media access control (MAC) address and execute a connection procedure for establishing a connection to another wireless communication apparatus, and a communicator configured to perform communication with the another wireless communication apparatus. The controller is configured to execute a 4-way-hand-shake procedure, as the connection procedure, the 4-way-hand-shake procedure using a device identifier assigned by the another wireless communication apparatus and being different from the MAC address. The controller is configured to, in a case where the device identifier is unrecognized by the another wireless communication apparatus in the 4-way-hand-shake procedure, execute a reconnection procedure for establishing a connection to the another wireless communication apparatus.

In one or more embodiments, a wireless communication method executed by a wireless communication apparatus includes executing processing including randomly generating a media access control (MAC) address and executing a connection procedure for establishing a connection to another wireless communication apparatus, and performing communication with the another wireless communication apparatus. The executing of the processing includes: executing a 4-way-hand-shake procedure as the connection procedure, the 4-way-hand-shake procedure using a device identifier assigned by the another wireless communication apparatus and being different from the MAC address; and, in a case where the device identifier is unrecognized by the another wireless communication apparatus in the 4-way-hand-shake procedure, executing a reconnection procedure for establishing a connection to the another wireless communication apparatus.

In one or more embodiments, a wireless communication system includes a first wireless communication apparatus and a second wireless communication apparatus. The first wireless communication apparatus is configured to randomly generate a media access control (MAC) address and execute a connection procedure for establishing a connection to the second wireless communication apparatus. The second wireless communication apparatus is configured to assign a device identifier different from the MAC address to the first wireless communication apparatus. The first wireless communication apparatus is configured to execute a 4-way-hand-shake procedure using the device identifier, as the connection procedure. The first wireless communication apparatus is configured to, in a case where the device identifier is unrecognized by the second wireless communication apparatus in the 4-way-hand-shake procedure, execute a reconnection procedure for establishing a connection to the second wireless communication apparatus.

According to the configurations above, it is possible to solve a situation that a wireless communication apparatus cannot establish a connection to another wireless communication apparatus in a case where a 4WHS procedure using a device identifier (in other words, a device ID) has been performed. Note that, the configurations above may exert, instead of or together with the above advantageous effects, other advantageous effects.

### BRIEF DESCRIPTION OF THE DRAWINGS

Fig. 1 is a block diagram illustrating an example of a configuration of a wireless communication system according to a first embodiment;
Fig. 2 is a block diagram illustrating an example of another configuration of the wireless communication system;
Fig. 3 is a block diagram illustrating an example of yet another configuration of the wireless communication system;
Fig. 4 is a block diagram illustrating an example of a hardware configuration of an STA according to the first embodiment;
Fig. 5 is a block diagram illustrating an example of a functional configuration of the STA according to the first embodiment;
Fig. 6 is a block diagram illustrating an example of a hardware configuration of an AP according to the first embodiment;
Fig. 7 is a block diagram illustrating an example of a functional configuration of the AP according to the first embodiment;
Fig. 8 is a sequence diagram illustrating an example of a connection procedure carried out by the STA and the AP;
Fig. 9 is a block diagram illustrating an example of a list of device IDs;
Fig. 10 is a sequence diagram illustrating an example of a connection procedure in a case where the STA holds no device ID;
Fig. 11 is a sequence diagram illustrating an example of a connection procedure in a case where the STA holds a device ID; and
Fig. 12 is a flowchart illustrating a flow of processing by the STA in the connection procedure according to the first embodiment.

### DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus and various conditions. All of combinations of elements included in each embodiment described below are not necessarily required to implement an apparatus of the present disclosure, and a part of the elements can be appropriately omitted. Hence, the scope of the present disclosure is not limited by the configuration described in each embodiment below. Configurations in which a plurality of configurations described in the embodiments below are combined can also be employed as long as the configurations are consistent with each other.

### 1. First Embodiment

### 1.1. Wireless Communication System

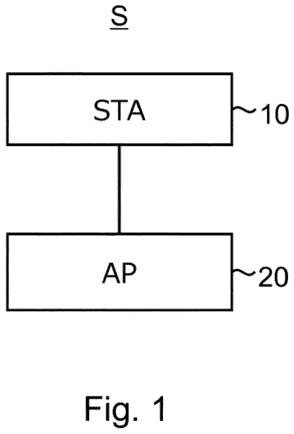

As illustrated in Fig. 1, a wireless communication system S includes one or more stations (STAs) 10 and one or more access points (APs) 20.

Each STA 10 is a wireless communication apparatus that performs wireless communication with the AP(s) 20. The STA 10 may be referred to as a "first wireless communication apparatus" or a "first node".

Each AP 20 is a wireless communication apparatus that performs wireless communication with any of the(s) STA 10 located within a reachable range of radio waves (in other words, a radio cell) of the AP 20. The AP 20 may be referred to as a "second wireless communication apparatus" or a "second node". The AP 20 has a base station function for connecting the STA 10 to a network.

In the present embodiment, a wireless communication apparatus or node not having the base station function is referred to as an "STA", and a wireless communication apparatus or a node having the base station function is referred to as an "AP". Note that a configuration of the STA 10 and a configuration of an AP 20 are not limited to the examples. The STA 10 may have functions (for example, the base station function) of the AP 20. The AP 20 may have functions of the STA 10. As described above, the wireless communication system S may include a wireless communication apparatus having the functions of both an STA and an AP.

In the IEEE 802.11 standards, a network configuration including the AP 20 and the STA 10 is referred to as an "infrastructure mode". In the infrastructure mode, the network configuration including the AP 20 and the STA 10 is referred to as a "basic service set (BSS)". Note that a network configuration including a plurality of BSSs may be employed, and such a network configuration is referred to as an "extended service set (ESS)".

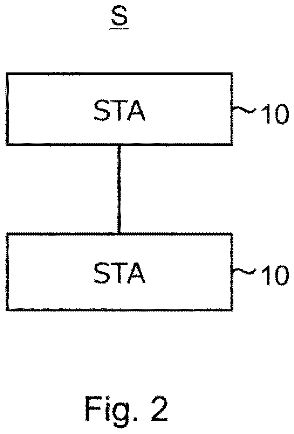

The wireless communication system S according to the present embodiment employs the network configuration of the infrastructure mode but may employ another network configuration. As illustrated in Fig. 2, the wireless communication system S may employ a network configuration including only two or more STAs 10, without including any AP. In the IEEE 802.11 standards, the network configuration including only the STAs 10 is referred to as an "ad hoc mode". The network configuration including only the STAs 10 is referred to as an "independent basic service set (independent BSS (IBSS))".

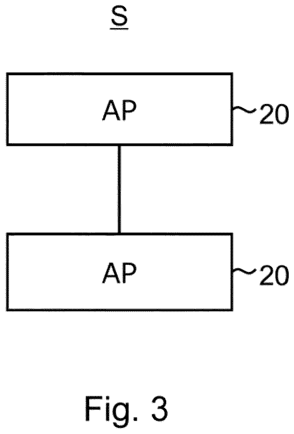

As another example, as illustrated in Fig. 3, the wireless communication system S may employ a network configuration including only two or more APs 20, without including any STA.

### 1.2. Configuration of STA

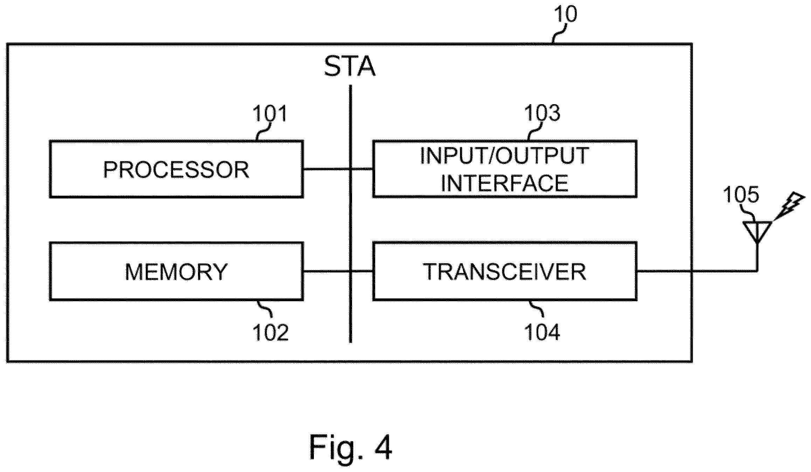

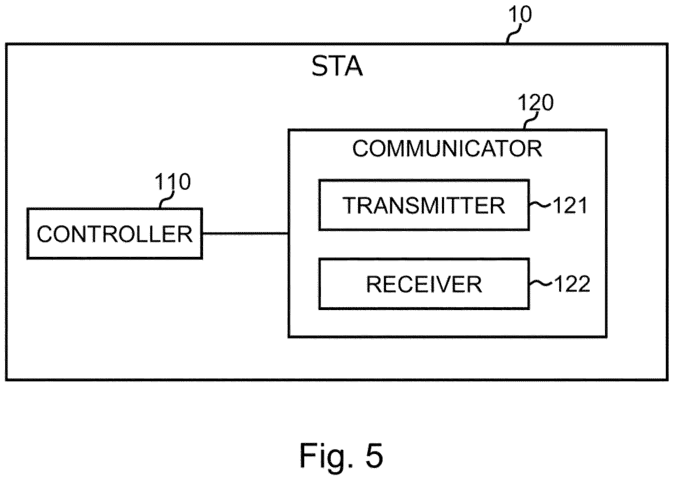

Next, with reference to Fig. 4 and Fig. 5, a configuration of the STA 10 will be described. As illustrated in Fig. 4, the STA 10 includes, as hardware elements, a processor 101, a memory 102, an input/output interface 103, a transceiver 104, and an antenna 105. The elements included in the STA 10 are connected to each other via an internal bus. Note that the STA 10 may include a hardware element other than the elements illustrated in Fig. 4.

The processor 101 is an arithmetic element for implementing various functions of the STA 10. The processor 101 may be a central processing unit (CPU), a graphics processing unit (GPU), and a system-on-a-chip (SoC) including an element such as a memory controller.

The memory 102 is an element that temporarily or permanently stores a program and data used to execute various types of processing in the STA 10. The memory 102 includes at least one storage medium, such as a random access memory (RAM) and an embedded multi media card (eMMC). The program includes one or more instructions for operations of the STA 10. The processor 101 deploys the program stored in the memory 102, into the memory 102 and/or a system memory (not illustrated) and executes the program, to thereby implement the functions of the STA 10.

The input/output interface 103 is an interface that receives an operation to the STA 10 and supplies the operation to the processor 101, and presents various pieces of information to a user. The input/output interface 103 may include a touch panel, for example.

The transceiver 104 includes a transmitter and a receiver (not illustrated). The transceiver 104 is a circuit that executes various types of signal processing for implementing wireless communication and includes a baseband processor, a radio frequency (RF) circuit, and the like. The transceiver 104 transmits a radio signal to the AP 20 via the antenna 105 and receives a radio signal from the AP 20 via the antenna 105.

As illustrated in Fig. 5, the STA 10 includes, as functional blocks, a controller 110 and a communicator 120. The communicator 120 includes a transmitter 121 and a receiver 122.

The controller 110 includes the processor 101 and the memory 102. In other words, the controller 110 is implemented by the processor 101 and the memory 102. The controller 110 executes various types of control processing in the STA 10. For example, the controller 110 controls wireless communication with the AP 20 via the communicator 120. Hence, the controller 110 transmits a radio signal to the AP 20 via the communicator 120 and receives a radio signal from the AP 20 via the communicator 120.

The communicator 120 includes the transceiver 104 and the antenna 105. In other words, the communicator 120 is implemented by the transceiver 104 and the antenna 105. The communicator 120 transmits a radio signal to the AP 20 and receives a radio signal from the AP 20. In other words, the communicator 120 performs wireless communication with the AP 20.

### 1.3. Configuration of AP

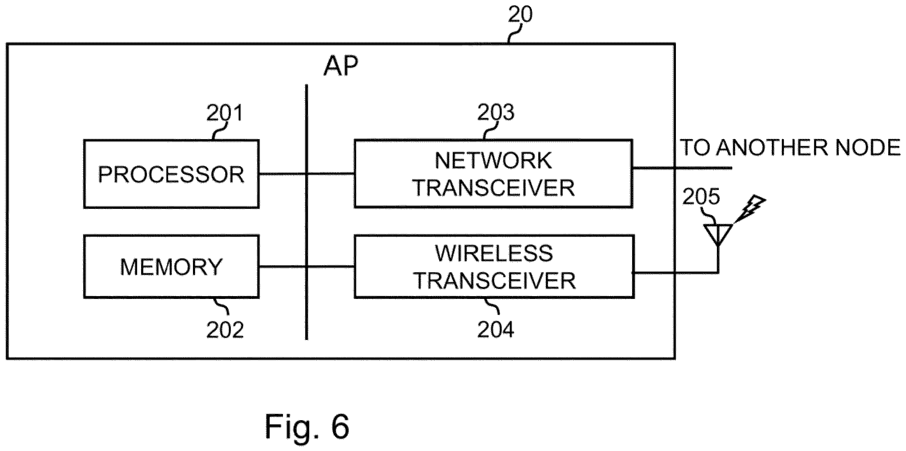

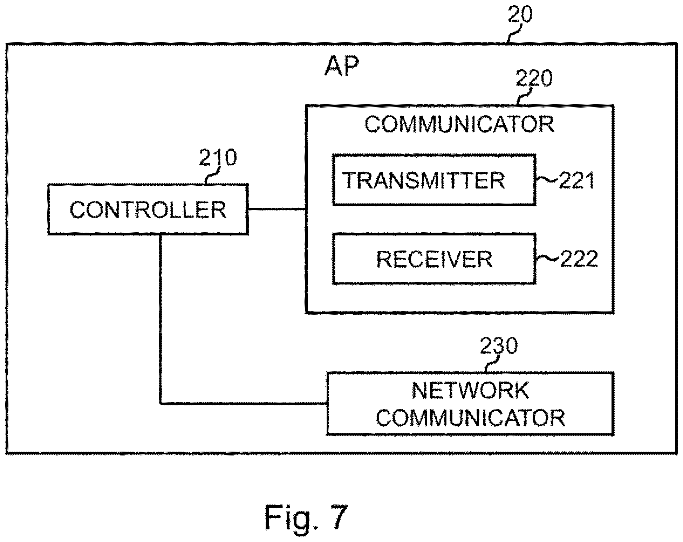

Next, with reference to Fig. 6 and Fig. 7, a configuration of the AP 20 will be described. As illustrated in Fig. 6, the AP 20 includes, as hardware elements, a processor 201, a memory 202, a network transceiver 203, a wireless transceiver 204, and an antenna 205. The elements included in the AP 20 are connected to each other via an internal bus. Note that the AP 20 may include a hardware element other than the elements illustrated in Fig. 6.

The processor 201 is an arithmetic element that implements various functions of the AP 20. The processor 201 may be a CPU. The processor 201 may include another processor such as a GPU or an SoC.

The memory 202 is an element that temporarily or permanently stores a program and data used to execute various types of processing in the AP 20. The memory 202 includes at least one storage medium, such as a read only memory (ROM), a RAM, a hard disk drive (HDD), and a solid state drive (SSD). The program includes one or more instructions for operations of the AP 20. The processor 201 deploys the program stored in the memory 202, into the memory 202 and/or a system memory (not illustrated) and executes the program, to thereby implement the functions of the AP 20.

The network transceiver 203 exchanges a signal with another node (for example, another AP 20). Such another AP 20 may, for example, be an AP 20 located outside a reachable range of radio waves of the AP 20, in other words, an AP 20 belonging to another BSS.

The wireless transceiver 204 includes a transmitter and a receiver (not illustrated). The wireless transceiver 204 is a circuit that executes various types of signal processing for implementing wireless communication and includes a baseband processor, an RF circuit, and the like. The wireless transceiver 204 transmits a radio signal to the STA 10 via the antenna 205 and receives a radio signal from the STA 10 via the antenna 205.

As illustrated in Fig. 7, the AP 20 includes, as functional blocks, a controller 210, a communicator 220, and a network communicator 230. The communicator 220 includes a transmitter 221 and a receiver 222.

The controller 210 includes the processor 201 and the memory 202. In other words, the controller 210 is implemented by the processor 201 and the memory 202. The controller 210 executes various types of control processing in the AP 20. For example, the controller 210 controls radio communication with the STA 10 via the communicator 220. Hence, the controller 210 transmits a radio signal to the AP 20 via the communicator 220 and receives a radio signal from the AP 20 via the communicator 220. The controller 210 controls communication with another node (for example, another AP 20) via the network communicator 230. The controller 210 transmits a signal to such another node via the network communicator 230 and receives a signal from such another node via the network communicator 230.

The communicator 220 includes the wireless transceiver 204 and the antenna 205. In other words, the communicator 220 is implemented by the wireless transceiver 204 and the antenna 205. The communicator 220 transmits a radio signal to the STA 10 and receives a radio signal from the STA 10. In other words, the communicator 220 performs wireless communication with the STA 10.

The network communicator 230 includes the network transceiver 203. In other words, the network communicator 230 is implemented by the network transceiver 203. The network transceiver 203 transmits a signal to another node and receives a signal from such another node.

### 1.4. Connection Procedure

The STA 10 and the AP 20 execute a connection procedure for establishing a wireless communication channel. For example, the connection procedure includes an authentication procedure, an association procedure, and a 4WHS procedure.

The connection procedure is executed by exchanging radio frames between the STA 10 and the AP 20. The radio frames may each be referred to as a "radio signal". The radio frame includes a MAC frame exchanged on a MAC layer. The MAC frame is defined in the IEEE 802.11 standards. The radio frame includes a management frame, a control frame, and a data frame.

The management frame includes, for example, a frame for a beacon for broadcasting information of a radio cell, a frame for the authentication procedure, a frame for the association procedure, and the like. The control frame includes a request to send (RTS) frame, an acknowledgement (ACK) frame, a clear to send (CTS) frame, and the like. The data frame is a frame for transmitting user data.

The header of the radio frame includes a frame control field, a destination address field, a transmission source address field, a basic service set identifier (BSSID) field, and the like. The frame control field includes a value indicating one of a management frame, a control frame, and the data frame, a value related to power management, and the like. The destination address field includes an identifier for identifying a node as a transmission destination of the radio frame. The destination address field may include a MAC address. The transmission source address field includes an identifier for identifying a node as a transmission source of the radio frame. The transmission source address field may include a MAC address. The BSSID field includes an identifier for identifying a BSS. The BSSID field may include the MAC address of each AP 20 belonging to the target BSS.

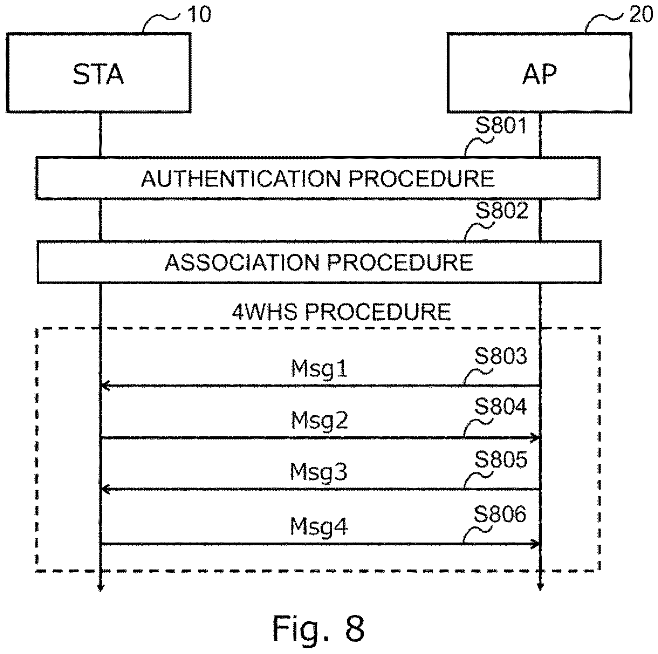

As illustrated in Fig. 8, the STA 10 and the AP 20 execute the authentication procedure (S801). The STA 10 generates an authentication frame. The STA 10 transmits the authentication frame to the AP 20. In response to this, the AP 20 generates an authentication frame. The AP 20 transmits the authentication frame to the

STA 10.

Further, the STA 10 and the AP 20 execute the association procedure (S802). The STA 10 generates an association request frame. The STA 10 transmits the association request frame to the AP 20. Next, the AP 20 generates an association response frame. The AP 20 transmits the association response frame to the STA 10. The association response frame includes an association ID (AID) for identifying an association. Through the association procedure, an association between the STA 10 and the AP 20 is established. An AID is assigned to the association.

Further, the STA 10 and the AP 20 execute the 4WHS procedure. The 4WHS procedure is a procedure in which an authenticator and a supplicant exchange random numbers to generate encryption keys for unicast communication called pairwise keys on the basis of a pre-shared key. The following 4WHS procedure is a Wi-Fi Protected Access 2 (WPA2) procedure also including group key generation for multicast communication and broadcast communication, but the configuration of the present embodiment is not limited to this example.

In the 4WHS procedure, the STA 10 and the AP 20 exchange messages 1 to 4. In the following, for simplicity of expression, message 1 transmitted from the AP 20 to the STA 10 is expressed as "Msg1", message 2 transmitted from the STA 10 to the AP 20 is expressed as "Msg2", message 3 transmitted from the AP 20 to the STA 10 is expressed as "Msg3", and message 4 transmitted from the STA 10 to the AP 20 is expressed as "Msg4".

Note that it is assumed that the STA 10 and the AP 20 hold a Pairwise Master Key (PMK) as the pre-shared key before the 4WHS procedure.

After the authentication procedure and the association procedure, the AP 20 initiates the 4WHS procedure. The AP 20 transmits Msg1 to the STA 10 (S803). Specifically, the controller 210 generates an authenticator nonce (ANonce). The controller 210 transmits Msg1 including the ANonce to the STA 10 via the communicator 220.

The STA 10 generates a pairwise transient key (PTK) according to Msg1. Specifically, the controller 110 generates a supplicant nonce (SNonce). The controller 110 generates the PTK, based on the PMK, the ANonce, the SNonce, the MAC address of the STA 10, and the MAC address of the AP 20. The controller 110 then transmits Msg2 including the SNonce to the AP 20 via the communicator 120 (S804).

The AP 20 generates a PTK according to Msg2. Specifically, the controller 210 generates the PTK, based on the PMK, the ANonce, the SNonce, the MAC address of the STA 10, and the MAC address of the AP 20. The controller 210 further generates a group temporal key (GTK) on the basis of a group master key (GMK). The controller 210 transmits Msg3 including the ANonce and the GTK to the STA 10 via the communicator 220 (S805).

In response to Msg3, the STA 10 transmits Msg4 to the AP 20 (S806). Specifically, the controller 110 generates Msg4 for indicating that the 4WHS procedure is completed. The controller 110 transmits Msg4 to the AP 20 via the communicator 120. Through the 4WHS procedure, the STA 10 installs the PTK and the GTK in the STA 10 itself. Similarly, the AP 20 installs the PTK and the GTK in the AP 20 itself.

### 1.5. Connection Procedure Using Device ID.

Normally, a MAC address is fixed and used as information for uniquely identifying the STA 10. However, in the present embodiment, the STA 10 randomly generates a MAC address. For this reason, the AP 20 may not be able to uniquely identify the STA 10 by using the MAC address. In consideration of this, in order for the AP 20 to identify the STA 10 under execution of randomization of a MAC address, the STA 10 and the AP 20 execute a connection procedure using a device identifier (referred to as a "device ID" below).

The device ID is information for identifying the STA 10 and is information different from a MAC address. The AP 20 generates a device ID and transmits the device ID to the STA 10. In this way, the AP 20 assigns the device ID to the STA 10.

The AP 20 may periodically generate a device ID and assign the device ID to the STA 10. In another example, in a case where a predetermined update condition is satisfied, the AP 20 may generate a device ID and assign the device ID to the STA 10.

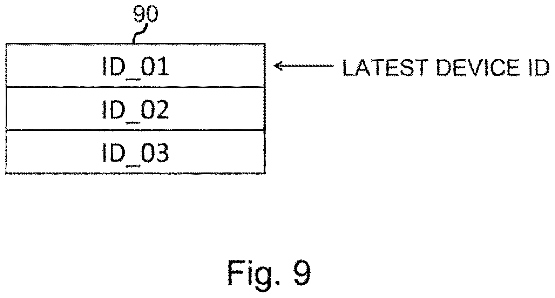

The AP 20 may hold information related to one or more device IDs generated by the AP 20 itself. For example, as illustrated in Fig. 9, the AP 20 may hold or store a list 90 including the one or more device IDs generated by the AP 20 itself. In this example, the AP 20 regularly generates a device ID. In the list 90, "ID_01" is the latest device ID.

In another example, the list 90 may be a list in which each device ID and information related to the STA 10 (for example, the MAC address) are associated with each other. In another example, the list 90 may be a list including one or more device IDs associated with a service set identifier (SSID) for identifying a network.

The AP 20 may transmit information indicating that the AP 20 itself supports the connection procedure using a device ID, to the STA 10. In the following, the information is referred to as "support information" for convenience. The support information may indicate that "the AP 20 supports the connection procedure using a device ID (or the connection procedure using a device ID is active)" or "the AP 20 does not support the connection procedure using a device ID (or the connection procedure using a device ID is not active)". The support information may be a flag indicating "the AP 20 supports the connection procedure using a device ID" or "the AP 20 does not support the connection procedure using a device ID". The AP 20 may broadcast a beacon frame including the support information. The support information may be included in a predetermined field (for example, an extended RSN capabilities field) included in the beacon frame. More specifically, the support information may be a device ID active field included in the extended RSN capabilities field.

The STA 10 receives the support information from the AP 20. In a case where the support information indicates that "the AP 20 supports the connection procedure using a device ID", the STA 10 executes the connection procedure using a device ID for the AP 20.

In the following, a connection procedure of a case where the STA 10 hold no device ID and a connection procedure of a case where the STA 10 holds a device ID will be sequentially described. Note that it is assumed, in the present embodiment, that the STA 10 and the AP 20 execute a connection procedure other than fast initial link setup (FILS)/pre association security negotiation (PASN).

### 1.6. Connection Procedure of Case where STA 10 Holds No Device ID

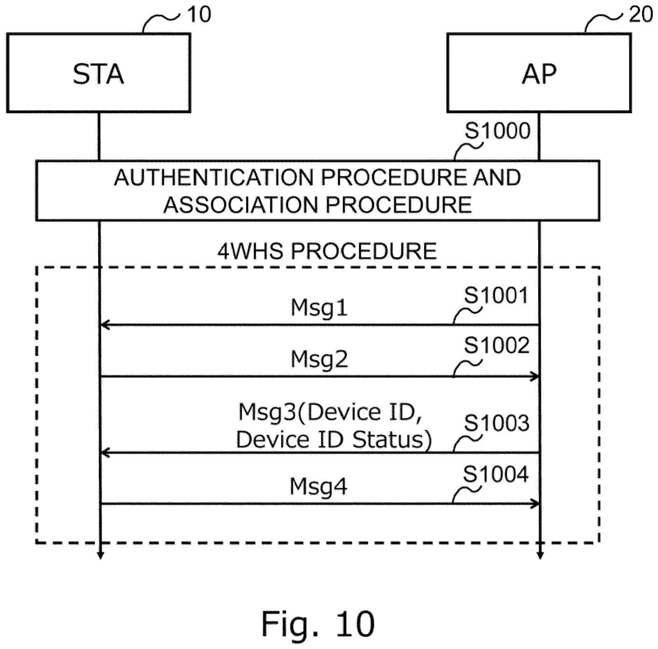

In a case where the STA 10 holds no device ID, the STA 10 may newly acquire a device ID from the AP 20 through a connection procedure illustrated in Fig. 10.

Similarly to the procedures described using Fig. 8, the STA 10 and the AP 20 execute the authentication procedure and the association procedure (S1000).

Next, the AP 20 initiates the 4WHS procedure. Similarly to the procedure described using Fig. 8, the AP 20 generates an ANonce. The AP 20 transmits Msg1 including the ANonce to the STA 10 (S1001).

Similarly to the procedure described using Fig. 8, the STA 10 generates an SNonce and a PTK. The STA 10 transmits Msg2 including the SNonce to the AP 20 (S1002). In this example, Msg2 may further include a field for a device ID (referred to as a "device ID field" below). Since the STA 10 holds no device ID at this time, the device ID field may include a value indicating that the STA 10 holds no device ID. In another example, the STA 10 may transmit Msg2 including no device ID field.

On the basis of Msg2, the AP 20 recognizes that the STA 10 holds no device ID. Further, similarly to the procedure described using Fig. 8, the AP 20 generates a PTK and a GTK. The AP 20 transmits Msg3 including the ANonce and the GTK to the STA 10 (S1003). In this example, Msg3 may further include a field for a device ID (referred to as a "device ID field" below) and a field indicating a status of the device ID (referred to as a "status field" below).

The device ID field includes the latest device ID. In a case of the list 90 in Fig. 9, the device ID field includes "ID_01". With this, the AP 20 can newly assign the device ID "ID_01" to the STA 10.

The status field may indicate that "the device ID is recognized by the AP 20" or "the device ID is unrecognized by the AP 20". The status field may indicate a "first value (for example, 0) indicating that the device ID is recognized by the AP 20" or a "second value (for example, 1) indicating that the device ID is unrecognized by the AP 20". In a case where the AP 20 newly assigns the device ID to the STA 10, the status field may indicate the first value.

The STA 10 acquires the device ID from Msg3. Similarly to the procedure described using Fig. 8, the STA 10 then transmits Msg4 to the AP 20 (S1004).

Note that the procedure in Fig. 10 is an example, and the STA 10 may newly acquire a device ID from the AP 20 through a procedure other than the connection procedure illustrated in Fig. 10.

### 1.7. Connection Procedure of Case where STA 10 Holds Device ID

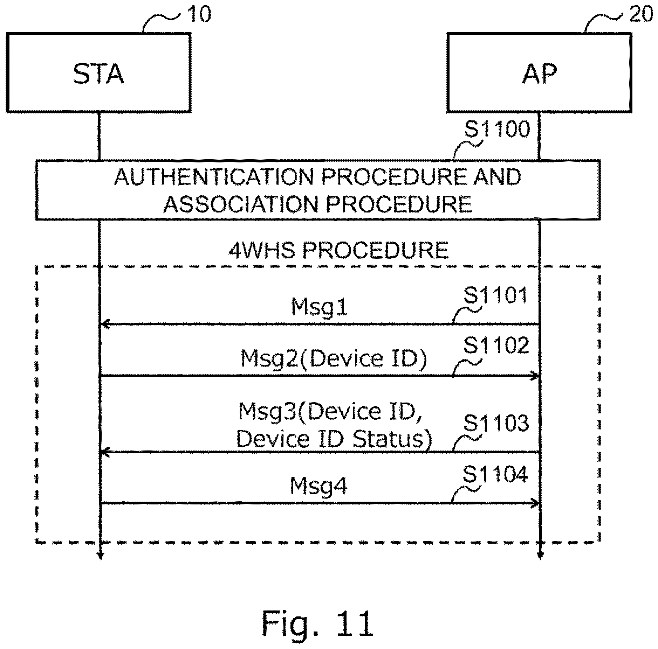

The STA 10 and the AP 20 may execute a connection procedure illustrated in Fig. 11.

Similarly to the procedures described using Fig. 8, the STA 10 and the AP 20 execute the authentication procedure and the association procedure (S1100).

Next, the AP 20 initiates the 4WHS procedure. Similarly to the procedure described using Fig. 8, the AP 20 generates an ANonce. The AP 20 transmits Msg1 including the ANonce to the STA 10 (51101).

Similarly to the procedure described using Fig. 8, the STA 10 generates an SNonce and a PTK. The STA 10 transmits Msg2 including the SNonce to the AP 20 (S1102). In this example, Msg2 further includes a device ID field. Since the STA 10 holds a device ID at this time, the STA 10 configures the device ID in the device ID field in Msg2. Hence, the STA 10 transmits Msg2 including the device ID.

On the basis of Msg2, the AP 20 recognizes that the STA 10 holds a device ID. Further, similarly to the procedure described using Fig. 8, the AP 20 generates a PTK and a GTK. The AP 20 transmits Msg3 including the ANonce and the GTK to the STA 10 (S1103). In this example, Msg3 further includes a device ID field and a status field. In the following, three cases where the AP 20 configures the device ID field and the status field in Msg3 will be described.

### (Case 1)

Assume that the device ID included in Msg2 is "ID_01". As illustrated in the list 90 in Fig. 9, the device ID included in Msg2 is the same as the latest device ID held by the AP 20. In this case, the AP 20 may configure a value (for example, 0) indicating that "the device ID included in Msg2 is the same as the latest device ID held by the AP 20" in the device ID field in Msg3. In another example, the AP 20 may configure the same device ID (specifically, "ID_01") in the device ID field in Msg3. Further, the AP 20 configures the first value in the status field in Msg3. The STA 10 receives Msg3. On the basis of Msg3, the STA 10 determines that the device ID is recognized by the AP 20. Then, similarly to the procedure described using Fig. 8, the STA 10 transmits Msg4 to the AP 20 (S1104). Thus, the 4WHS procedure is completed.

### (Case 2)

Assume that the device ID included in Msg2 is "ID_02". As illustrated in the list 90 in Fig. 9, the device ID included in Msg2 is the same as a past device ID held by the AP 20. Expressed another way, the device ID included in Msg2 is included in the list 90 although being different from the latest device ID. In this case, the AP 20 may configure the latest device ID "ID_01" in the device ID field in Msg3. Further, the AP 20 configures the first value in the status field in Msg3. The STA 10 receives Msg3. The STA 10 acquires the latest device ID "ID_01" from Msg3. Then, similarly to the procedure described using Fig. 8, the STA 10 transmits Msg4 to the AP 20 (S1104). Thus, the 4WHS procedure is completed.

### (Case 3)

Assume that the list 90 in Fig. 9 includes some errors due to operation of the AP 20 being unstable. In this situation, even in a case where the device ID included in Msg2 is a correct device ID, the AP 20 determines that the device ID is not included in the list 90, in some cases. In this case, the AP 20 configures the second value in the status field in Msg3. In this case, the AP 20 may omit the device ID field in Msg3.

Assume that mutual connectivity between the STA 10 and the AP 20 is unstable. In such a situation, even in a case where a device ID included in Msg2 is included in the list 90, the AP 20 configures the second value in the status field in Msg3 in some cases.

Due to the various factors, the AP 20 configures the second value in the status field in Msg3 in some cases. The STA 10 receives Msg3 configured as described above. On the basis of Msg3, the STA 10 determines that the device ID is unrecognized by the AP 20. In one example, the STA 10 does not transmit Msg4 indicating that the 4WHS procedure is completed. Hence, the STA 10 and the AP 20 cannot complete the 4WHS procedure.

Note that, in another example, on the basis of Msg3, in a case where the STA 10 determines that the device ID is unrecognized by the AP 20, the STA 10 may retransmit Msg2 including the device ID to the AP 20.

### 1.8. Reconnection Procedure

In Case 3 described above, the STA 10 and the AP 20 cannot complete the 4WHS procedure using a device ID. This may consequently cause a situation where the STA 10 cannot establish a connection to the AP 20.

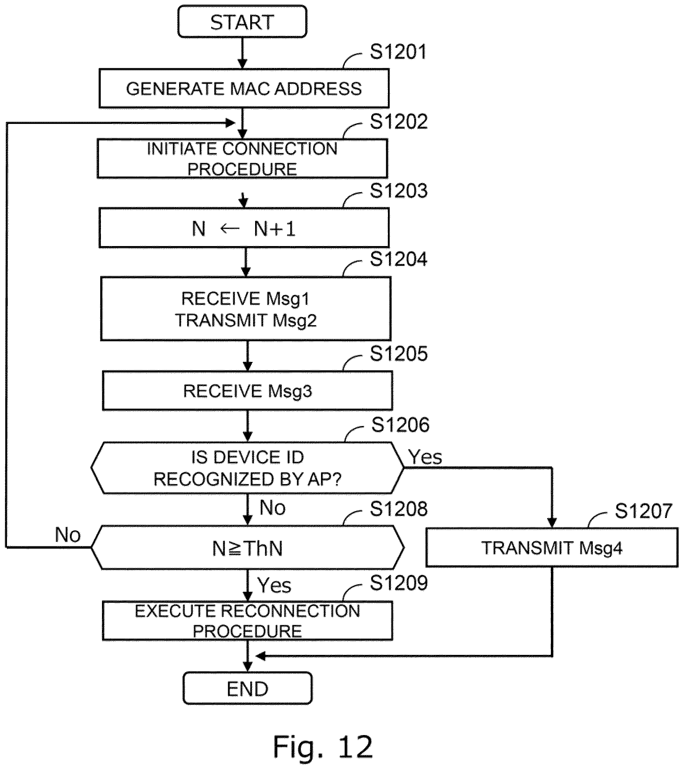

To solve the issue, in a case where a device ID is unrecognized by the AP 20 in the 4WHS procedure using a device ID, the STA 10 according to the present embodiment executes a reconnection procedure for establishing a connection to the AP 20. With reference to Fig. 12, an example of the reconnection procedure will be described below.

Note that, in the example in Fig. 12, it is assumed that the STA 10 has already acquired a device ID from the AP 20 through the 4WHS procedure described using Fig. 10 and holds the device ID.

As illustrated in Fig. 12, the controller 110 randomly generates a MAC address (S1201). Next, the controller 110 initiates the connection procedure for establishing a connection to the AP 20 (S1202). Concretely, as described using Fig. 11, the controller 110 executes the authentication procedure, the association procedure, and the 4WHS procedure using a device ID.

The controller 110 increments a counter N (S1203). The counter N is a variable for counting the number of trials of the 4WHS procedure. The counter N is incremented every time the device ID is unrecognized by the AP 20. Hence, expressed another way, the counter N represents the number of times the device ID is unrecognized by the AP 20. The counter N is configured at an initial value (specifically, 0) at predetermined timing. The predetermined timing is any timing before the STA 10 initiates the connection procedure for establishing a connection to the AP 20. For example, the predetermined timing may be timing that the STA 10 is turned on.

The controller 110 receives, after executing the authentication procedure and the association procedure, Msg1 from the AP 20 in the 4WHS procedure using a device ID. The controller 110 then transmits Msg2 including a device ID field to AP 20 (S1204). In this step, the STA 10 configures the device ID held by the STA 10 itself, in the device ID field. Hence, the STA 10 transmits Msg2 including the device ID to the AP 20.

The controller 110 receives Msg3 including the device ID field and a status field from AP 20 (S1205).

On the basis of the status field, the controller 110 determines whether the device ID is recognized by the AP 20 (S1206). In a case where the status field indicates the first value, the controller 110 determines that the device ID is recognized by the AP 20. In this case, the controller 110 judges the situation to be "Yes" in S1206 and transmits Msg4 to the AP 20 (S1207). Thus, the 4WHS procedure is completed.

In contrast to this, assume that the status field indicates the second value due to mutual connectivity between the STA 10 and the AP 20 being unstable, for example. The controller 110 determines that the device ID is unrecognized by the AP 20. In this case, the controller 110 judges the situation to be "No" in S1206.

Next, the controller 110 determines whether the counter N is equal to or larger than a predetermined threshold ThN (S1208). The threshold ThN may be an integer equal to or larger than two, for example. In this example, the threshold ThN is two. Hence, the controller 110 judges the situation to be "No" in S1208 and returns to S1202. The controller 110 executes the connection procedure again. Note that, when the processing in Fig. 12 returns from S1208 to S1202, the controller 110 may execute all or part of the authentication procedure, the association procedure, and the 4WHS procedure using a device ID again. For example, the controller 110 may execute only the 4WHS procedure using a device ID again. As described above, in the case where the device ID is unrecognized by the AP 20, the controller 110 repeatedly executes the 4WHS procedure using a device ID.

Next, when the processing in Fig. 12 advances to S1208, the counter N is equal to or larger than the threshold ThN (= 2). The controller 110 judges the situation to be "Yes" in S1208 and executes the reconnection procedure (S1209). The controller 110 performs the 4WHS procedure using no device ID, as the reconnection procedure. In other words, the controller 110 executes the 4WHS procedure described using Fig. 8. For example, the STA 10 and the AP 20 may execute S803 to S806 in Fig. 8. Specifically, the controller 110 receives Msg1 from the AP 20 (S803). The controller 110 transmits Msg2 to the AP 20 (S804). Msg2 here includes no device ID field. The controller 110 receives Msg3 from the AP 20 (S805). Msg3 here includes no device ID field and no status field. The controller 110 transmits Msg4 to the AP 20 (S806). Since the STA 10 and the AP 20 do not use any device ID as described above, the STA 10 and the AP 20 can complete the 4WHS procedure. Hence, the STA 10 can establish a connection to the AP 20.

Note that, in S1209, the AP 20 may initiate the reconnection procedure on the basis of a radio frame or a radio signal from the STA 10. For example, the AP 20 receives a radio frame including the same MAC address from the STA 10. This allows the AP 20 to recognize that the reconnection procedure is requested from the same STA 10. The STA 10 may transmit a radio frame or a radio signal including information related to a request of the reconnection procedure, to the AP 20.

Advantageous effects of the present embodiment will be described below. As described above, the AP 20 configures the second value in the status field in Msg3 in some cases under the following situations. Hence, the STA 10 and the AP 20 cannot complete the 4WHS procedure using a device ID, and consequently the STA 10 cannot establish a connection to the AP 20.
- mutual connectivity between the STA 10 and the AP 20 is unstable
- operation of the AP 20 is unstable (for example, the list 90 includes some errors)

By the configuration described using Fig. 12, in a case where a device ID is unrecognized by the AP 20 in the 4WHS procedure using a device ID, the STA 10 performs the 4WHS procedure using no device ID as the reconnection procedure. Since the STA 10 and the AP 20 do not use any device ID, the STA 10 and the AP 20 can complete the 4WHS procedure. The AP 20 cannot determine whether the STA 10 to establish a connection to is the same STA, but connectivity between the STA 10 and the AP 20 can be ensured. As described above, it is possible to solve a situation where the STA 10 cannot establish a connection to the AP 20.

In a case where a device ID is unrecognized by the AP 20 in the 4WHS procedure using a device ID, the STA 10 repeatedly executes the 4WHS procedure using a device ID until the counter N reaches or exceeds the threshold ThN. For example, during the processing being repeated, mutual connectivity between the STA 10 and the AP 20 becomes stable in some cases. In this case, the AP 20 configures the first value in the status field in Msg3. In response to Msg3, the STA 10 transmits Msg4 to the AP 20. As described above, the configuration can increase the possibility that the STA 10 and the AP 20 can complete the 4WHS procedure using a device ID.

### (Alteration 1)

In the course of the processing in Fig. 12 returning from S1208 to S1202, the controller 110 may stand by, by using a timer. Specifically, in a case where a device ID is unrecognized by the AP 20 in the 4WHS procedure using a device ID, the controller 110 waits by using the timer before repeating the 4WHS procedure using a device ID. During the STA 10 waiting by using the timer, mutual connectivity between the STA 10 and the AP 20 becomes stable in some cases. The configuration can increase the possibility that the STA 10 and the AP 20 can complete the 4WHS procedure using a device ID.

### (Alteration 2)

The STA 10 may execute the 4WHS procedure using a device ID (for example, S1101 to S1104 in Fig. 11) as the reconnection procedure in S1209. Specifically, the STA 10 may transmit Msg2 including a device ID to the AP 20. In this configuration, the STA 10 may wait by using the timer before executing the reconnection procedure. During the STA 10 waiting by using the timer, mutual connectivity between the STA 10 and the AP 20 becomes stable in some cases. In this case, the AP 20 configures the first value in the status field in Msg3. In response to Msg3, the STA 10 transmits Msg4 to the AP 20. The configuration can increase the possibility that the STA 10 and the AP 20 can complete the 4WHS procedure using a device ID.

The STA 10 may repeatedly execute the 4WHS procedure using a device ID (for example, S1101 to S1104 in Fig. 11) as the reconnection procedure in S1209. In this configuration, the STA 10 may configure the value of the timer in a manner that the value of the timer gradually increases as the number of repetitions of the reconnection procedure increases. With this, every time the STA 10 repeats the reconnection procedure, the stand-by time of the STA 10 gradually increases. Hence, during the STA 10 standing by by using the timer, mutual connectivity between the STA 10 and the AP 20 becomes stable in some cases. The configuration can further increase the possibility that the STA 10 and the AP 20 can complete the 4WHS procedure using a device ID.

### (Alteration 3)

The STA 10 may execute the 4WHS procedure for newly acquiring a device ID (specifically, the 4WHS procedure described using Fig. 10) as the reconnection procedure in S1209. Specifically, the STA 10 transmits Msg2 including no device ID or Msg2 indicating that the STA 10 holds no device ID, to the AP 20. The STA 10 receives Msg3 including a new device ID from the AP 20. The new device ID here is different from the device ID included in Msg2 in S1204 and is the latest device ID in the list 90 held by the AP 20. The STA 10 then transmits Msg4 to the AP 20. In this way, the STA 10 and the AP 20 can complete the 4WHS procedure using a device ID.

### (Alteration 4)

In a case where mutual connectivity between the STA 10 and the AP 20 is in an unstable state, the AP 20 broadcasts support information indicating "not supporting the connection procedure using a device ID" by using a beacon frame. In other words, the AP 20 may shift from a "state of supporting the connection procedure using a device ID" to a "state of not supporting the connection procedure using a device ID". In S1208, the STA 10 may receive the beacon frame broadcast by the AP 20 and check details of the support information again. In a case where the support information indicates "supporting the connection procedure using a device ID, the STA 10 may return to S1202 from S1208 to execute the processing. In a case where the support information indicates "not supporting the connection procedure using a device ID", the STA 10 may advance to S1209 from S1208 and execute the 4WHS procedure using no device ID (specifically, the 4WHS procedure described using Fig. 8) as the reconnection procedure.

### (Alteration 5)

In a case where the STA 10 judges the situation to be "No" in S1208, the STA 10 may return to S1201. Specifically, in a case where a device ID is unrecognized by the AP 20 in the 4WHS procedure using a device ID, the STA 10 may regenerate a MAC address.

### (Alteration 6)

The condition for judging whether to execute the reconnection procedure (S1208) is not limited to the condition based on the counter N. For example, in S1208, the STA 10 may use a condition for judging whether the 4WHS procedure using a device ID can be completed within a predetermined period. The predetermined period may be defined by a timer. In a case where the 4WHS procedure using a device ID cannot be completed within the predetermined period, the STA 10 may execute the reconnection procedure.

### 2. Other Embodiments

The present disclosure is not limited to the embodiments above. The embodiments are merely examples, and it is naturally understood that various alterations are possible.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, in a configuration in which one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

### 3. Supplementary Notes

The whole or part of the embodiments and the alterations can be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

### (Supplementary Note 1)

A wireless communication apparatus (10) comprising:
a controller (110) configured to randomly generate a media access control (MAC) address and execute a connection procedure for establishing a connection to another wireless communication apparatus (20); and
a communicator (120) configured to perform communication with the another wireless communication apparatus, wherein
the controller is configured to
execute a 4-way-hand-shake procedure, as the connection procedure, the 4-way-hand-shake procedure using a device identifier assigned by the another wireless communication apparatus and being different from the MAC address, and
execute a reconnection procedure for establishing a connection to the another wireless communication apparatus in a case where the device identifier is unrecognized by the another wireless communication apparatus in the 4-way-hand-shake procedure.

### (Supplementary Note 2)

The wireless communication apparatus according to Supplementary Note 1, wherein
the controller is configured to
repeatedly execute the 4-way-hand-shake procedure using the device identifier in a case where the device identifier is unrecognized by the another wireless communication apparatus, and
execute the reconnection procedure in a case where a number of times the device identifier is unrecognized by the another wireless communication apparatus reaches or exceeds a predetermined threshold.

### (Supplementary Note 3)

The wireless communication apparatus according to Supplementary Note 2, wherein
the controller is configured to
wait by using a timer, before repeatedly executing the 4-way-hand-shake procedure using the device identifier in a case where the device identifier is unrecognized by the another wireless communication apparatus,.

### (Supplementary Note 4)

The wireless communication apparatus according to any one of Supplementary Notes 1 to 3, wherein
the controller is configured to execute, as the reconnection procedure, a 4-way-hand-shake procedure not using the device identifier.

### (Supplementary Note 5)

The wireless communication apparatus according to any one of Supplementary Notes 1 to 3, wherein
the controller is configured to execute, as the reconnection procedure, the 4-way-hand-shake procedure using the device identifier, and
the controller is configured to transmit a message 2 including the device identifier to the another wireless communication apparatus.

### (Supplementary Note 6)

The wireless communication apparatus according to Supplementary Note 5, wherein
the controller is configured to wait by using a timer, before executing the reconnection procedure.

### (Supplementary Note 7)

The wireless communication apparatus according to Supplementary Note 6, wherein
the controller is configured to repeatedly execute, as the reconnection procedure, the 4-way-hand-shake procedure using the device identifier, and
the controller is configured to set a value of the timer in a manner that the value of the timer gradually increases as a number of repetitions of the reconnection procedure increases.

### (Supplementary Note 8)

The wireless communication apparatus according to any one of Supplementary Notes 1 to 3, wherein
the controller is configured to execute, as the reconnection procedure, a 4-way-hand-shake procedure for newly acquiring the device identifier, and
the controller is configured to
transmit a message 2 not including the device identifier to the another wireless communication apparatus and
receive a message 3 including a new device identifier from the another wireless communication apparatus.

### (Supplementary Note 9)

The wireless communication apparatus according to any one of Supplementary Notes 1 to 3, wherein
the controller is configured to
receive information transmitted from the another wireless communication apparatus in a case where the device identifier is unrecognized by the another wireless communication apparatus, and
execute, as the reconnection procedure, a 4-way-hand-shake procedure not using the device identifier in a case where the information indicates that the connection procedure using the device identifier is not supported.

### (Supplementary Note 10)

The wireless communication apparatus according to any one of Supplementary Notes 1 to 9, wherein
the communicator is configured to, in the 4-way-hand-shake procedure as the connection procedure,
transmit a message 2 including the device identifier and
determine that the device identifier is unrecognized by the another communicator in a case where the communicator receives a message 3 including information indicating that the device identifier is unrecognized by the another wireless communication apparatus.

### (Supplementary Note 11)

A wireless communication method executed by a wireless communication apparatus (10), the wireless communication method comprising:
executing processing including randomly generating a media access control (MAC) address and executing a connection procedure for establishing a connection to another wireless communication apparatus (20); and
performing communication with the another wireless communication apparatus, wherein
the executing of the processing includes
executing a 4-way-hand-shake procedure as the connection procedure, the 4-way-hand-shake procedure using a device identifier assigned by the another wireless communication apparatus and being different from the MAC address, and
executing a reconnection procedure for establishing a connection to the another wireless communication apparatus in a case where the device identifier is unrecognized by the another wireless communication apparatus in the 4-way-hand-shake procedure.

### (Supplementary Note 12)

A program, when being executed, causing a processor (101) in a wireless communication apparatus (10) to execute:
executing processing including randomly generating a media access control (MAC) address and executing a connection procedure for establishing a connection to another wireless communication apparatus (20); and
performing communication with the another wireless communication apparatus, wherein
the executing of the processing includes
executing a 4-way-hand-shake procedure as the connection procedure, the 4-way-hand-shake procedure using a device identifier assigned by the another wireless communication apparatus and being different from the MAC address, and
executing a reconnection procedure for establishing a connection to the another wireless communication apparatus in a case where the device identifier is unrecognized by the another wireless communication apparatus in the 4-way-hand-shake procedure.

### (Supplementary Note 13)

A computer-readable non-transitory tangible storage medium storing, when being executed, a program causing a processor (101) in a wireless communication apparatus (10) to execute:
executing processing including randomly generating a media access control (MAC) address and executing a connection procedure for establishing a connection to another wireless communication apparatus (20); and
performing communication with the another wireless communication apparatus, wherein
the executing of the processing includes
executing a 4-way-hand-shake procedure as the connection procedure, the 4-way-hand-shake procedure using a device identifier assigned by the another wireless communication apparatus and being different from the MAC address, and
executing a reconnection procedure for establishing a connection to the another wireless communication apparatus in a case where the device identifier is unrecognized by the another wireless communication apparatus in the 4-way-hand-shake procedure,.

### (Supplementary Note 14)

A wireless communication system (S) including a first wireless communication apparatus (10) and a second wireless communication apparatus (20), wherein
the first wireless communication apparatus is configured to randomly generate a media access control (MAC) address and execute a connection procedure for establishing a connection to the second wireless communication apparatus,
the second wireless communication apparatus is configured to assign a device identifier different from the MAC address to the first wireless communication apparatus,
the first wireless communication apparatus is configured to
execute a 4-way-hand-shake procedure using the device identifier, as the connection procedure, and
execute a reconnection procedure for establishing a connection to the second wireless communication apparatus in a case where the device identifier is unrecognized by the second wireless communication apparatus in the 4-way-hand-shake procedure.

## Claims

1. A wireless communication apparatus (10) comprising:
a controller (110) configured to randomly generate a media access control (MAC) address and execute a connection procedure for establishing a connection to another wireless communication apparatus (20); and
a communicator (120) configured to perform communication with the another wireless communication apparatus, wherein
the controller is configured to
execute a 4-way-hand-shake procedure, as the connection procedure, the 4-way-hand-shake procedure using a device identifier assigned by the another wireless communication apparatus and being different from the MAC address, and
execute a reconnection procedure for establishing a connection to the another wireless communication apparatus in a case where the device identifier is unrecognized by the another wireless communication apparatus in the 4-way-hand-shake procedure,.

2. The wireless communication apparatus according to claim 1, wherein
the controller is configured to
repeatedly execute the 4-way-hand-shake procedure using the device identifier in a case where the device identifier is unrecognized by the another wireless communication apparatus, and
execute the reconnection procedure in a case where a number of times the device identifier is unrecognized by the another wireless communication apparatus reaches or exceeds a predetermined threshold,.

3. The wireless communication apparatus according to claim 2, wherein
the controller is configured to
wait by using a timer, before repeatedly executing the 4-way-hand-shake procedure using the device identifier in a case where the device identifier is unrecognized by the another wireless communication apparatus,.

4. The wireless communication apparatus according to any one of claims 1 to 3, wherein
the controller is configured to execute, as the reconnection procedure, a 4-way-hand-shake procedure not using the device identifier.

5. The wireless communication apparatus according to any one of claims 1 to 3, wherein
the controller is configured to execute, as the reconnection procedure, the 4-way-hand-shake procedure using the device identifier, and
the controller is configured to transmit a message 2 including the device identifier to the another wireless communication apparatus.

6. The wireless communication apparatus according to claim 5, wherein
the controller is configured to wait by using a timer, before executing the reconnection procedure.

7. The wireless communication apparatus according to claim 6, wherein
the controller is configured to repeatedly execute, as the reconnection procedure, the 4-way-hand-shake procedure using the device identifier, and
the controller is configured to set a value of the timer in a manner that the value of the timer gradually increases as a number of repetitions of the reconnection procedure increases.

8. The wireless communication apparatus according to any one of claims 1 to 3, wherein
the controller is configured to execute, as the reconnection procedure, a 4-way-hand-shake procedure for newly acquiring the device identifier, and
the controller is configured to
transmit a message 2 not including the device identifier to the another wireless communication apparatus and
receive a message 3 including a new device identifier from the another wireless communication apparatus.

9. The wireless communication apparatus according to any one of claims 1 to 3, wherein
the controller is configured to
receive information transmitted from the another wireless communication apparatus in a case where the device identifier is unrecognized by the another wireless communication apparatus, and
execute, as the reconnection procedure, a 4-way-hand-shake procedure not using the device identifier in a case where the information indicates that the connection procedure using the device identifier is not supported.

10. The wireless communication apparatus according to any one of claims 1 to 9, wherein
the communicator is configured to, in the 4-way-hand-shake procedure as the connection procedure,
transmit a message 2 including the device identifier and
determine that the device identifier is unrecognized by the another communicator in a case where the communicator receives a message 3 including information indicating that the device identifier is unrecognized by the another wireless communication apparatus,.

11. A wireless communication method executed by a wireless communication apparatus (10), the wireless communication method comprising:
executing processing including randomly generating a media access control (MAC) address and executing a connection procedure for establishing a connection to another wireless communication apparatus (20); and
performing communication with the another wireless communication apparatus, wherein
the executing of the processing includes
executing a 4-way-hand-shake procedure as the connection procedure, the 4-way-hand-shake procedure using a device identifier assigned by the another wireless communication apparatus and being different from the MAC address, and
executing a reconnection procedure for establishing a connection to the another wireless communication apparatus in a case where the device identifier is unrecognized by the another wireless communication apparatus in the 4-way-hand-shake procedure.

12. A wireless communication system (S) including a first wireless communication apparatus (10) and a second wireless communication apparatus (20), wherein
the first wireless communication apparatus is configured to randomly generate a media access control (MAC) address and execute a connection procedure for establishing a connection to the second wireless communication apparatus,
the second wireless communication apparatus is configured to assign a device identifier different from the MAC address to the first wireless communication apparatus,
the first wireless communication apparatus is configured to
execute a 4-way-hand-shake procedure using the device identifier, as the connection procedure, and
execute a reconnection procedure for establishing a connection to the second wireless communication apparatus in a case where the device identifier is unrecognized by the second wireless communication apparatus in the 4-way-hand-shake procedure.
